# NEUE EUROPÄISCHE PATENTSCHRIFT

(11) **EP 2 622 244 B2**
(45) Veröffentlichungstag und Bekanntmachung des Hinweises auf die Entscheidung über den Einspruch: **07.11.2018**
(45) Hinweis auf die Patenterteilung: 11.05.2016
(21) Anmeldenummer: 11810994.1
(22) Anmeldetag: 27.09.2011
(51) Int. Cl.: F16H 55/18, F16H 55/06, F16D 1/112

(54) **ZAHNRADANORDNUNG UND VERFAHREN ZUR HERSTELLUNG EINES BAJONETTVERSCHLUSSES**
GEAR WHEEL ARRANGEMENT AND METHOD FOR PRODUCING A BAYONET CATCH
AGENCEMENT DE ROUE DENTÉE ET PROCÉDÉ DE FABRICATION D'UN EMBOÎTEMENT À BAÏONNETTE

(30) Priorität: 29.09.2010 AT 16252010
(43) Veröffentlichungstag der Anmeldung: 07.08.2013
(73) Patentinhaber: Miba Sinter Austria GmbH, 4663 Laakirchen (AT)
(72) Erfinder: BUCHLEITNER, Helmut, A-4863 Seewalchen (AT); DICKINGER, Karl, A-4655 Vorchdorf (AT); MÜLLER, Alexander, A-4813 Altmünster (AT); SIESSL, Wolfgang, A-4801 Traunkirchen (AT)
(74) Vertreter: Burger, Hannes
(86) Internationale Anmeldenummer: PCT/AT2011/050014
(87) Internationale Veröffentlichungsnummer: WO 2012/040762

(56) Entgegenhaltungen:
- WO-A2-2008/142131
- AT-B1- 506 961
- DE-A1-102005 041 357
- GB-A- 2 360 825
- JP-A- 8 159 242

## Beschreibung

Die Erfindung betrifft eine Zahnradanordnung mit einem Hauptzahnrad und einem gegenüber diesem relativ in Umfangsrichtung verdrehbaren Zahnrad, wobei das Hauptzahnrad einen Zahnradkörper aufweist, auf dem in axialer Richtung vorstehend eine Nabe einerseits zur Aufnahme einer Welle und andererseits zur Anordnung des verdrehbaren Zahnrades darauf angeordnet ist, wobei das verdrehbare Zahnrad eine zu einer axial verlaufenden Mittelachse des Hauptzahnrades koaxiale Ausnehmung aufweist, und wobei das Hauptzahnrad mit dem verdrehbaren Zahnrad mittels eines Bajonettverschlusses verbunden ist, der zwischen der Nabe und dem verdrehbaren Zahnrad ausgebildet ist, wobei an der Nabe radial nach außen ragende Nabenvorsprünge angeordnet sind und in axialer Richtung zwischen den Nabenvorsprüngen und dem Zahnradkörper eine in Richtung des Umfanges der Nabe verlaufende Hinterschneidung in Form einer Nut ausgebildet ist, wobei in der Ausnehmung des verdrehbaren Zahnrades radial nach innen ragende Vorsprünge ausgebildet sind, und wobei ein Innendurchmesser zwischen zwei einander gegenüberliegenden Vorsprüngen eine Größe aufweist, die zumindest annähernd einem Außendurchmesser der Nabe im Bereich von Ausnehmungen entspricht, die in Umfangsrichtung zwischen zwei nebeneinander angeordneten Nabenvorsprüngen an der Nabe ausgebildet sind. Weiter betrifft die Erfindung ein Verfahren zur Herstellung eines Bajonettverschlusses für eine ein Hauptzahnrad und ein gegenüber diesem relativ in Umfangsrichtung verdrehbares Zahnrad aufweisende erfindungsgemäße Zahnradanordnung, wobei das Hauptzahnrad einen Zahnradkörper aufweist, auf dem in axialer Richtung vorstehend eine Nabe einerseits zur Aufnahme einer Welle und andererseits zur Anordnung des verdrehbaren Zahnrades darauf angeordnet ist, wozu das verdrehbare Zahnrad eine zu einer axial verlaufenden Mittelachse des Hauptzahnrades koaxiale Ausnehmung aufweist.

Eine derartige Zahnradanordnung ist beispielsweise aus der von der Anmelderin stammenden WO 2005/090830 A1 bekannt, die ein Zahnrad für eine spielfreie Stirnradstufe mit einer Nabe, mit einem von der Nabe getragenem Zahnkranz, der entlang einer achsnormalen Teilungsebene in zwei Teilkränze, nämlich in einen nabenfesten Kranzteil und in einen diesen gegenüber koaxial drehbar gelagerten Kranzring, geteilt ist, und mit einer die Nabe umschließenden Ringfeder, die sich mit ihren einander in Umfangsrichtung gegenüberliegenden Enden an einstückig mit den beiden Teilkränzen ausgebildeten, einander in axialer Richtung überlappenden Stützstegen abstützt, die in Umfangsrichtung des Zahnkranzes hintereinander angeordnet sind. Der Stützsteg eines Teilkranzes durchsetzt den anderen Teilkranz in einer Durchtrittsöffnung mit Spiel in Umfangsrichtung und bildet der Stützsteg des Teilkranzes mit der Durchtrittsöffnung einen die Durchtrittsöffnung begrenzenden Montageanschlag für den anderen Stützsteg. Der Kranzring ist auf der Nabe beispielsweise mit Hilfe eines Sprengringes axial gesichert.

Aus der WO 2008/142131 A2 ist ebenfalls eine derartige Zahnradanordnung bekannt, die zwei Zahnräder umfasst, wobei eines gegen das andere in bestimmten Grenzen drehbeweglich angeordnet ist. Die beiden Zahnräder sind über ein Federelement miteinander gekoppelt. Das Federelement ist dabei einstückig mit einem der Zahnräder ausgeführt. Um die axiale Position der beiden Zahnräder zueinander nach dem Einstellen der Lage der Zähne zueinander zu sichern, kann ein Bajonettverschluss angeordnet sein.

Die JP 08-159242 A beschreibt eine Zahnradanordnung gemäß dem Oberbegriff von Anspruch 1, mit einem Hauptzahnrad und einem verdrehbaren Zahnrad. Das Hauptzahnrad weist eine Nabe auf, auf der das verdrehbare Zahnrad angeordnet ist. Die beiden Zahnräder sind über einen Bajonettverschluss miteinander verbunden. Dazu sind am Hauptzahnrad an der Nabe in radialer Richtung sich erstreckende, leistenförmige Vorsprünge vorgesehen. Das verdrehbare Zahnrad weist entsprechende Schlitze auf, durch die die Vorsprünge beim Zusammenbau geführt werden können.

Es ist die Aufgabe der vorliegenden Erfindung, eine eingangs genannte Zahnradanordnung hinsichtlich der Verbindung der beiden Zahnräder miteinander zu verbessern. Es ist weiters eine Teilaufgabe der Erfindung, ein verbessertes Verfahren zur Herstellung der Zahnradanordnung anzugeben.

Diese Aufgabe der Erfindung wird durch die eingangs genannte Zahnradanordnung gelöst, bei der durch den Bajonettverschluss eine Axialsicherung für das verdrehbare Zahnrad gebildet ist und damit die relative Lage des verdrehbaren Zahnrades in axialer Richtung der Zahnradanordnung fixiert wird, wobei eine Breite der Hinterschneidung eine Größe aufweist, die zumindest annähernd einer Breite der Vorsprünge des verdrehbaren Zahnrades in axialer Richtung entspricht.

Die Aufgabe wird weiters durch das eingangs genannte Verfahren gelöst, dass die Schritte umfasst:
- sintertechnische Herstellung einer einstückigen Vorform für das Hauptzahnrad aus dem Zahnradkörper und der Nabe, wobei am Umfang der Nabe von einer Stirnfläche der Nabe beginnend, in axialer Richtung auf den Zahnradkörper verlaufende Vertiefungen ausgebildet werden, die sich bis zu einem, der Stirnfläche der Nabe in axialer Richtung gegenüberliegenden Ausnehmungsendwand erstrecken, und die jeweils zwei Seitenwände und eine Bodenfläche aufweisen, wobei zumindest eine der Seitenwände einen Winkel zur Bodenfläche der Ausnehmung einschließt, der größer als 90 ° ist;
- spanende Bearbeitung der Nabe der Vorform in Umfangsrichtung, wodurch die Ausnehmungsendwände entfernt und teilweise Hinterschneidungen gebildet werden, wodurch Nabenvorsprünge gebildet werden, die einen Teil des Bajonettverschlusses bilden.

Durch die Ausbildung des Bajonettverschlusses zwischen der Nabe, die die Welle aufnimmt, auf der die Zahnradanordnung angeordnet wird, und dem verdrehbaren Zahnrad wird erreicht, dass eine zusätzliche Nabe auf dem Hauptzahnrad nicht erforderlich ist, wodurch der Aufbau der Zahnradanordnung vereinfacht und hinsichtlich der Kräfteverteilung der zwischen dem Hauptzahnrad und dem verdrehbaren Zahnrad im Betrieb der Zahnradanordnung auftretenden Kräfte verbessert werden kann. Zudem ist damit der Zusammenbau der Zahnradanordnung einfacher, da auf eine zusätzliche Axialsicherung zur Sicherung der relativen Lage der beiden Zahnräder in axialer Richtung zueinander verzichtet werden kann.

Bevorzugt wird das Hauptzahnrad sintertechnisch hergestellt. Zur Ausbildung der Nabenvorsprünge als Teil des Bajonettverschlusses ist damit eine nachträgliche spanende Bearbeitung erforderlich, um die "Nut" zwischen den Verschlusselementen und dem Zahnradkörper des Hauptzahnrades auszubilden. In Vorbereitung der Verschlusselemente wird das Hauptzahnrad an der Nabe mit Ausnehmungen im Bereich des Umfanges der Nabe hergestellt, die beim fertigen Hauptzahnrad die Zwischenräume zwischen den Verschlusselementen in Umfangsrichtung bilden, die das Durchschieben der entsprechenden Vorsprünge am verdrehbaren Zahnrad zur Ausbildung des Bajonettverschlusses ermöglichen. Bei der späteren spanenden Nachbearbeitung trifft das Bearbeitungswerkzeug in diesen Bereichen also teilweise auf "Freistellungen" (durch die Entfernung der Ausnehmungsendwände) sodass das Bearbeitungswerkzeug mehrmals - über den Umfang der Nabe betrachtet - in das Material der Nabe eintaucht. Hierbei weist das erfindungsgemäße Verfahren den Vorteil auf, dass durch die Ausbildung eines stumpfen Winkels zwischen den Seitenwänden und der Bodenflächen der Ausnehmungen - in Umfangsrichtung betrachtet - eine bessere Schonung des Bearbeitungswerkzeuges beim Wiedereintauchen in das Material erreicht wird, sodass die Standzeit des Werkzeuges verlängert werden kann. Zudem wird damit erreicht, dass die Gratbildung im Bereich der spanenden Bearbeitung des Hauptzahnrades reduziert wird.

Zur Ausbildung des Bajonettverschlusses sind an der Nabe radial nach außen ragende Nabenvorsprünge angeordnet. Es wird damit eine relativ einfache Fertigung des Bajonettverschlusses ermöglicht, die insbesondere auch nach einem Sinterverfahren erfolgen kann. Diese radial nach außen ragenden Nabenvorsprünge können zudem hinsichtlich ihrer Querschnittsfläche - in axialer Richtung der Zahnradanordnung betrachtet - relativ großflächig ausgebildet werden, wodurch ein besseres Verschleißverhalten durch das Vorhandensein einer großen Anlagefläche der Verschlusselemente des Bajonettverschlusses des verdrehbaren Zahnrades an den Verschlusselementen des Bajonettverschlusses des Hauptzahnrades, d.h. den Nabenvorsprüngen, erreicht werden kann.

In axialer Richtung ist zwischen den Nabenvorsprüngen und dem Zahnradkörper eine in Richtung des Umfanges der Nabe verlaufende, Hinterschneidung ausgebildet, wodurch die Verschlussfestigkeit des Bajonettverschlusses verbessert werden kann.

Zur Ausbildung des Bajonettverschlusses sind in der Ausnehmung des verdrehbaren Zahnrades radial nach innen ragende Vorsprünge ausgebildet, da mit dieser Ausführung die sintertechnische Herstellung des verdrehbaren Zahnrades vereinfacht werden kann, indem die Pressformen einfacher ausgestaltet werden können.

Gemäß einer Ausführungsvariante ist vorgesehen, dass die Nabenvorsprünge symmetrisch verteilt über den Umfang der Nabe angeordnet sind, sodass die Anlageflächen des verdrehbaren Zahnrades am Hauptzahnrad gleichmäßig über den Umfang des Hauptzahnrades verteilt angeordnet sind, und damit die einwirkenden Kräfte gleichmäßig über den gesamten Umfang der Zahnradanordnung verteilt werden können. Es wird damit das Verschleißverhalten positiv beeinflusst.

Vorzugsweise erstreckt sich die Hinterschneidung durchgehend über den Umfang der Nabe, um den Zusammenbau der Zahnradanordnung zu vereinfachen, da damit des verdrehbare Zahnrad beidseitig der Nabenvorsprünge auf die Nabe aufgeschoben werden kann.

In Hinblick auf einer Reduzierung des Verschleißes der Zahnradanordnung ist es von Vorteil, wenn die Nabenvorsprünge in Umfangsrichtung der Nabe eine Gesamtlänge aufweisen, die zwischen 20 %, insbesondere 40 %, vorzugsweise 50 %, und 80 %, insbesondere 60 %, der Länge des Umfanges der Nabe beträgt.

Bevorzugt weisen die Nabenvorsprünge in axialer Richtung betrachtet, also in Draufsicht auf die Planfläche, einen trapezförmigen Querschnitt auf. Einerseits wird damit der Zusammenbau der Zahnradanordnung vereinfacht. Insbesondere wird damit aber die Herstellung des Bajonettverschlusses verbessert, indem, wie dies voranstehend bereits erläutert wurde, damit der Verschleiß der Bearbeitungswerkzeuge reduziert wird.

Zur Vereinfachung des Zusammenbaus der Zahnradanordnung kann vorgesehen sein, dass ein Übergang zwischen einer Stirnfläche der Nabe und der Umfangsfläche im Bereich der Nabenvorsprünge gerundet oder gefast ausgebildet ist, da damit das Aufschieben des verdrehbaren Zahnrades auf die Nabe des Hauptzahnrades vereinfacht werden kann.

Gemäß einer Ausführungsvariante des Verfahrens ist vorgesehen, dass der Winkel zwischen den zumindest einen Seitenflächen und den Bodenflächen ausgewählt wird aus einem Bereich mit einer unteren Grenze von 95 °, insbesondere 100 °, und einer oberen Grenze von 130 °, insbesondere 120 °. Hinsichtlich der Werkzeugschonung und der Bearbeitungsgeschwindigkeit haben sich in der Praxis Winkel aus diesem Winkelbereich als besonders vorteilhaft erwiesen.

Es kann auch vorgesehen werden, dass zumindest einzelne Kanten, bevorzugt sämtliche Kanten, der Ausnehmungen gerundet oder gefast ausgebildet werden, wodurch eine weitere Verbesserung in Hinblick auf die Standzeit des Werkzeuges erreicht werden kann, indem nämlich im Bereich des Eintauchens des Werkzeuges in das Material des Hauptzahnrades der Winkel, in dem die Ausnehmungsflächen zum Werkzeug stehen, für diesen Bereich stumpfer ausgebildet ist, wobei aber gleichzeitig dieser stumpfere Winkel nur auf den Kantenbereich beschränkt ist, sodass die Abtraggeschwindigkeit des Materials nicht verringert wird. Zudem wird damit, d.h. durch die im Vergleich zum Kantenbereich mit einem kleineren Winkel zur Bodenfläche angeordneten Seitenflächen der Ausnehmungen, die Anlagefläche des verdrehbaren Zahnrades an dem Hauptzahnrad im zusammengebauten Zustand der Zahnradanordnung nicht so weit verringert, dass die Vorteile der gleichmäßigen Beanspruchung des Bajonettverschlusses über den Umfang der Nabe verschlechtert würde.

Vorzugsweise wird das verdrehbare Zahnrad ebenfalls sintertechnisch hergestellt, wobei radial nach innen verlaufende Vorsprünge in der Ausnehmung des Zahnrades geformt werden. Es ist damit ohne wesentliche Nachbearbeitung die Fertigung des verdrehbaren Zahnrades möglich, wobei auch komplexe Bajonettgeometrien ausbildbar sind, ohne dass das verdrehbare Zahnrad einer spanenden Nachbearbeitung unterzogen werden müsste.

Für eine bessere Anlage des verdrehbaren Zahnrades am Hauptzahnrad kann vorgesehen werden, dass an einer in radialer Richtung verlaufenden Stirnfläche des verdrehbaren Zahnrades ein Ringsteg ausgebildet wird.

Zum besseren Verständnis der Erfindung wird diese anhand der nachfolgenden Figuren näher erläutert.

Es zeigen jeweils in stark schematisch vereinfachter Darstellung:
- Fig. 1: eine Zahnradgruppe gemäß dem Stand der Technik in Explosionsdarstellung;
- Fig. 2: eine erste Ausführungsvariante einer erfindungsgemäßen Zahnradgruppe in Schrägansicht;
- Fig. 3: ein Detail der Zahnradanordnung nach Fig. 2;
- Fig. 4: ein Detail der Zahnradanordnung nach Fig. 2 in Seitenansicht geschnitten;
- Fig. 5: das verdrehbare Zahnrad der Ausführungsvariante nach Fig. 2 in Schrägansicht;
- Fig. 6: eine Vorform des Hauptzahnrades der Ausführungsvariante nach Fig. 2 in Schrägansicht;
- Fig. 7: das Hauptzahnrad nach Fig. 6 in Schrägansicht nach einer spanenden Bearbeitung;
- Fig. 8: eine nicht erfindungsgemäße Ausführungsvariante einer Zahnradgruppe in Schrägansicht;
- Fig. 9: ein Detail der Zahnradanordnung nach Fig. 8;
- Fig. 10: ein Detail einer Ausführungsvariante eines Bajonettverschlusses im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

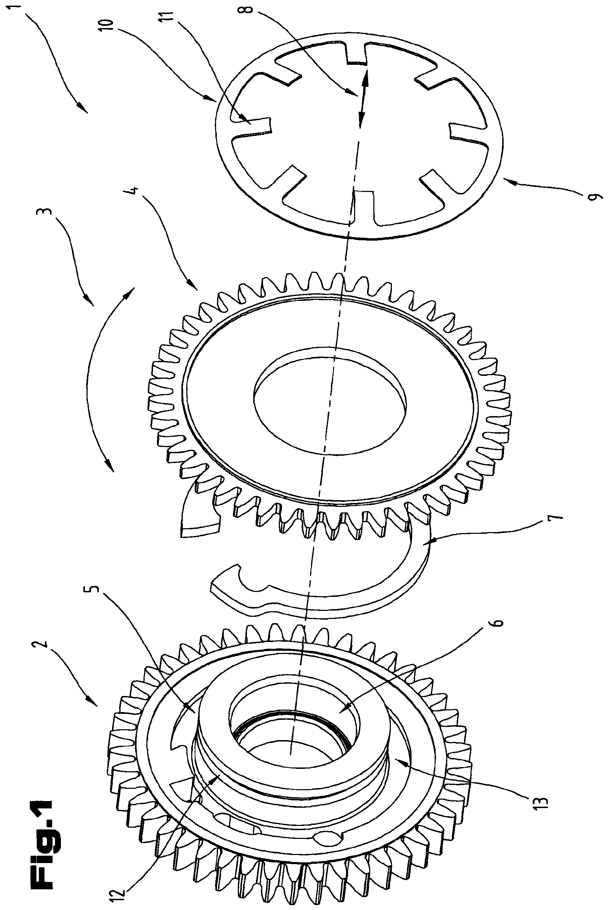

Fig. 1 zeigt in Explosionsdarstellung eine Zahnradanordnung 1, wie sie aus dem Stand der Technik bekannt ist. Diese Zahnradanordnung 1, auch "split-gear" genannt, weist ein Hauptzahnrad 2 und ein gegenüber diesem relativ in einer Umfangsrichtung 3 verdrehbares Zahnrad 4 auf, wobei das Hauptzahnrad 2 eine Nabe 5 aufweist, die insbesondere einstückig mit dem Hauptzahnrad 2 ausgebildet ist. Das verdrehbare Zahnrad 4 ist auf der Nabe 5 des Hauptzahnrades 2 verdrehbar angeordnet. Die Nabe 5 weist eine Ausnehmung 6 in Form einer Bohrung zur Aufnahme einer nicht dargestellten Welle auf.

Das verdrehbare Zahnrad 4 ist mittels eines Federelementes 7, das in diesem Fall also so genannte Ω - Feder ausgebildet ist, in Umfangsrichtung 3 gegenüber dem Hauptzahnrad 2 vorgespannt, wie dies in der WO 2005/090830 A1 beschrieben ist, die somit in diesem Umfang des prinzipiellen Aufbaus der Zahnradanordnung 1 zum Inhalt vorliegender Beschreibung gehört. Für die Vorspannung ist, wie eingangs beschrieben, ein Stützsteg ausgebildet, der einen Montageanschlag für einen weiteren Stützsteg bildet. Das Federelement 7 liegt an diesen Stützstegen mit seinen beiden offenen Endbereichen an.

Um das weitere verdrehbare Zahnrad 4 auch in einer axialen Richtung 8 gegen das Hauptzahnrad vorzuspannen, ist ein weiteres Federelement 9, das bei dieser Ausführungsvariante die Form einer Tellerfeder, insbesondere einer im weitesten Sinne zu bezeichnenden geschlitzten Tellerfeder, angeordnet. Dieses weitere Federelement 9 weist einen äußeren Ring 10 auf, von dem schräg radial nach innen weisend mehrere Zungen 11, so genannte Federzungen, abstehen. Diese Zungen 11 werden von einer umlaufenden Nut 12, die in einem Endbereich 13 der Nabe 5 ausgebildet ist, aufgenommen. Durch die Federspannung wird somit das weitere verdrehbare Zahnrad 4 in der axialen Richtung gegenüber dem Hauptzahnrad vorgespannt.

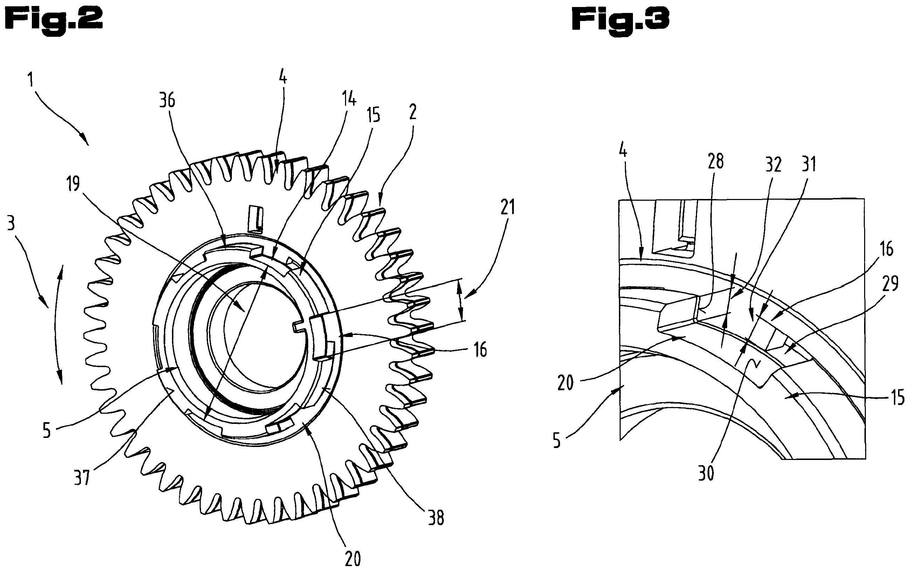

Die Fig. 2 bis 7 zeigen eine erste Ausführungsvariante der Zahnradanordnung 1 nach der Erfindung.

Aus Fig. 2 ist wiederum das Hauptzahnrad 2 und das daran anliegende verdrehbare Zahnrad 4 ersichtlich. Das verdrehbare Zahnrad 4 ist dabei auf der Nabe 5 angeordnet. Diese Ausführungsvariante der Zahnradanordnung weist u.a. den Vorteil auf, dass das zusätzliche Federelement 9 der Ausführung nach Fig. 1 zur Axialsicherung des verdrehbaren Zahnrades 4 nicht erforderlich ist.

Obwohl nicht dargestellt, kann bei dieser und bei sämtlichen weiteren Ausführungsvarianten der Erfindung die Vorspannkraft für das verdrehbare Zahnrad 4 in Umfangsrichtung 3 durch das Federelement 7, beispielsweise die Ω - Feder, erzeugt werden.

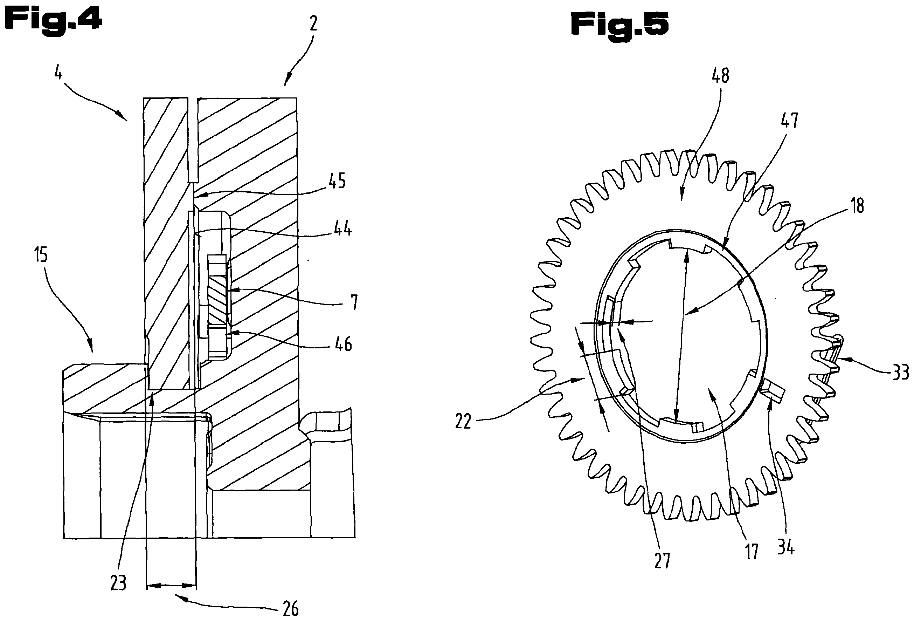

Zur Verbindung und zur Axialsicherung des verdrehbaren Zahnrades 4 am Hauptzahnrad 2 ist zwischen der Nabe 5 des Hauptzahnrades 2 und dem verdrehbaren Zahnrad 4 ein Bajonettverschluss 14 angeordnet. Dazu weist, wie dies im Detail auch aus Fig. 3 ersichtlich ist, die Nabe 5 radial nach außen über vorspringende Verschlusselemente, die im Folgenden als Nabenvorsprünge 15 bezeichnet werden, auf. Das verdrehbare Zahnrad 4 weist ebenfalls Vorsprünge 16 auf, die allerdings radial nach innen verlaufend in einer Ausnehmung 17 (Fig. 5) angeordnet sind. Die Ausnehmung 17 ist koaxial zur Nabe 5 ausgebildet und dient dazu, das verdrehbare Zahnrad 4 auf die Nabe 5 des Hauptzahnrades 2 aufschieben zu können. Dazu weist ein Innendurchmesser 18 zwischen zwei einander gegenüberliegenden Vorsprüngen 16, wie dies in Fig. 5 dargestellt ist, ein Größe auf, die zumindest annähernd einem Außendurchmesser 19 der Nabe im Bereich zwischen Ausnehmungen 20 entspricht, wobei die Ausnehmungen 20 in Umfangsrichtung 3 zwischen zwei nebeneinander angeordneten Nabenvorsprüngen 15 an der Nabe ausgebildet sind.

Mit "zumindest annähernd" ist in diesem Zusammenhang gemeint, dass der Innendurchmesser 18 zumindest dem Außendurchmesser 19 hinsichtlich seiner Abmessung entspricht, vorzugsweise jedoch geringfügig größer ist, um damit das verdrehbare Zahnrad 4 leichter auf die Nabe 5 aufschieben zu können.

Die Ausnehmungen 20 zwischen zwei Nabenvorsprüngen 15 weisen eine Breite 21 in Umfangsrichtung 3 auf, die zumindest so groß ist, wie eine Breite 22 (Fig. 5) der Vorsprünge 16 am verdrehbaren Zahnrad 4 in gleicher Richtung, sodass die Vorsprünge 16 in diese Ausnehmungen 20 eingeschoben werden können. Vorzugsweise ist die Breite 21 geringfügig größer als die Breite 22. Es ist weiters bevorzugt, wenn die Ausnehmungen 20 in axialer Richtung der Zahnradanordnung 1 einen Querschnitt aufweisen, der zumindest annähernd dem Querschnitt in gleicher Richtung der Vorsprünge 16 des verdrehbaren Zahnrades 4 entspricht.

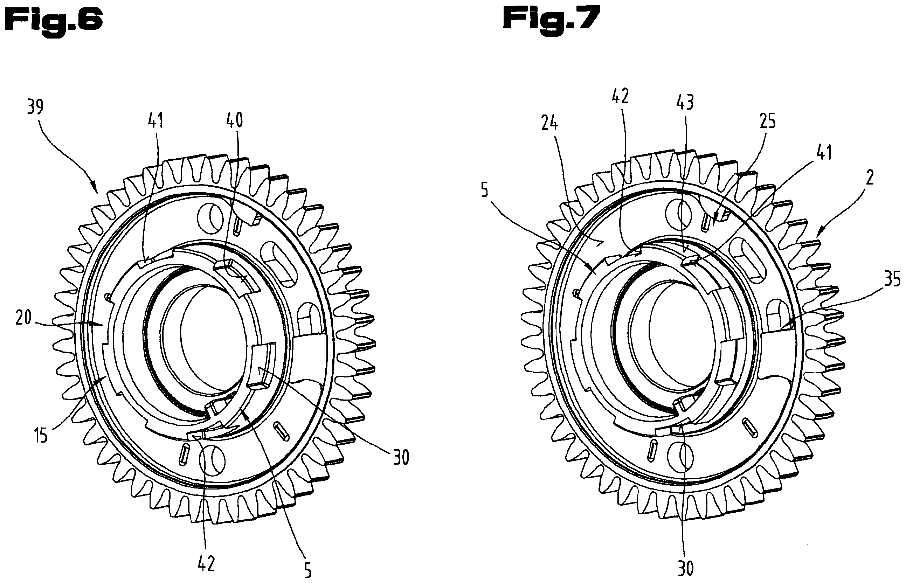

Hinter den Nabenvorsprüngen 15 ist axialer Richtung der Zahnradanordnung 1 eine Hinterschneidung 23 in Form einer Nut ausgebildet, wie dies insbesondere aus Fig. 4 zu ersehen ist. Die Nabenvorsprünge 15 sind somit in axialer Richtung beabstandet zu einer Stirnfläche 24 (Fig. 7) eines Zahnradkörpers 25 des Hauptzahnrades 2 - das Hauptzahnrad 2 besteht aus dem Zahnradkörper 25 und der Nabe 5 - angeordnet. Eine Breite 26 der Hinterschneidung 23 bzw. der Nut ist dabei so gewählt, dass sie ein Größe aufweist, die zumindest annähernd einer Breite 27 (Fig. 5) in axialer Richtung der Vorsprünge 16 des verdrehbaren Zahnrades 4 entspricht, wobei bei mit zumindest annähernd gemeint ist, dass die Breite 26 der Hinterschneidung 23 so gewählt ist, dass das verdrehbare Zahnrad 4 in Umfangsrichtung 3 verdreht werden kann.

In der bevorzugten Ausführung ist eine in Richtung auf den Zahnradkörper 25 des Hauptzahnrades 2 weisende Stirnfläche 28 (Fig. 3) der Nabenvorsprünge 15 koplanar zu der Richtung auf die Nabenvorsprünge 15 weisenden Stirnfläche 24 des Zahnradkörpers 25 ausgerichtet, sodass die Hinterschneidung 23 in Umfangsrichtung 3 der Zahnradanordnung einen rechteckförmigen bzw. quadratischen Querschnitt aufweist. Es ist jedoch auch möglich, dass diese Stirnfläche 28 schiefwinkelig zur Stirnfläche 24 des Zahnradkörpers 25 angeordnet ist, sodass sich die Hinterschneidungen 23 in Umfangsrichtung verengen. Einerseits wird damit eine höhere Anpressung des verdrehbaren Zahnrades 4 an das Hauptzahnrad 2 in einer bestimmten Stellung erreicht, andererseits kann damit auch die Verdrehbarkeit des verdrehbaren Zahnrades 4 beschränkt werden.

Die Beschränkung der Verdrehbarkeit des verdrehbaren Zahnrades 4 in Umfangsrichtung 3 der Zahnradanordnung 1 kann auch damit erreicht werden, dass die Hinterschneidung 23 in Umfangsrichtung 3 nicht durchgängig ist, sodass also die Nabenvorsprünge 15 nur teilweise beabstandet zur Stirnfläche 24 des Zahnradkörpers 25 des Hauptzahnrades 2 angeordnet sind.

In der bevorzugten Ausführungsvariante ist die Hinterschneidung 23 in Umfangsrichtung 3 jedoch durchgängig ausgeführt, sodass also eine Ringnut entsteht, in um Bereich der Ausnehmungen 20 in axialer Richtung nach vorne offen ist. Dabei ist ein Nutengrund 29 (Fig. 3) bevorzugt ebenflächig mit einer Bodenfläche 30 der Ausnehmungen 20 ausgebildet. Es besteht jedoch auch die Möglichkeit, dass der Nutengrund 29 in radialer Richtung gegen diese Bodenfläche abgesetzt ist, beispielsweise tiefer ausgebildet ist, um damit eine "Schmiermittelnut" auszubilden. Der Nutengrund 29 kann jedoch in radialer Richtung von der Längsmittelachse durch die Zahnradanordnung 1 beginnend betrachtet höher sein als die Bodenflächen 30 der Ausnehmungen 20, wobei in diesem Fall die Vorsprünge 16 des verdrehbaren Zahnrades 4 entsprechen angepasst werden müssen, d.h. dass eine Höhe 31 der Vorsprünge 16 in radialer Richtung kleiner ist als eine Höhe 32 der Nabenvorsprünge 15, wobei sich die Differenz aus der Höhendifferenz in radialer Richtung zwischen dem Nutengrund 29 und der Bodenfläche 30 ergibt.

Für den Zusammenbau der Zahnradanordnung 1 wird das verdrehbare Zahnrad 4 auf die Nabe 5 aufgesetzt, wobei die die Vorsprünge 16 des verdrehbaren Zahnrades 4 in axialer Richtung fluchtend zu den Ausnehmungen 20 der Nabe 5 positioniert werden, danach das verdrehbare Zahnrad 4 in axialer Richtung in Richtung auf den Zahnradkörper 25 des Hauptzahnrades 2 geschoben und wenn die Vorsprünge 16 des verdrehbaren Zahnrades 4 in axialer Richtung hinter den Nabenvorsprüngen 15 liegen in Umfangsrichtung 3 gegen das Hauptzahnrad verdreht, wodurch über die Vorsprünge 16 und die Nabenvorsprünge 15 der Bajonettverschluss 14 zur axialen Sicherung des verdrehbaren Zahnrades 4 relativ zum Hauptzahnrad 2 hergestellt ist. Gegebenenfalls kann zwischen dem verdrehbaren Zahnrad 4 und dem Hauptzahnrad 2 das Federelement 7 angeordnet werden. Um die relative Position in dieser Auslieferungsstellung, bei der die Zähne des verdrehbaren Zahnrades 4 mit den Zähnen des Hauptzahnrades 2 zumindest annähernd in axialer Richtung fluchten, zu sichern wird ein Sicherungselement 33 durch die beiden Zahnräder geschoben, wozu sowohl das verdrehbare Zahnrad 4 als auch das Hauptzahnrad 2 jeweils eine Ausnehmung 34 bzw. 35 in Form eines Durchbruches aufweisen. Nach dem Einbau der Zahnradanordnung 1 wird dieses Sicherungselement 33 wieder entfernt.

Es sei an dieser Stelle angemerkt, dass, obwohl in den Fig.2 bis 5 jeweils sechs Nabenvorsprünge 15 und sechs Vorsprünge 16 sowie dementsprechend sechs Ausnehmungen 20 dargestellt sind, im Rahmen der Erfindung eine davon abweichende Anzahl an Nabenvorsprünge 15, Vorsprünge 16 und Ausnehmungen 20 vorgesehen werden können, beispielsweise jeweils drei, vier, fünf, sieben, acht, etc..

Vorzugsweise sind die Nabenvorsprünge 15 des Hauptzahnrades 2 und die Vorsprünge 16 des verdrehbaren Zahnrades 4 symmetrisch über den Umfang der Nabe 5 bzw. der Ausnehmung 17 des verdrehbaren Zahnrades 4 angeordnet, d.h. dass zwischen die Abstände zwischen den Nabenvorsprüngen 15 bzw. Vorsprüngen 16 jeweils gleich groß sind, wie dies in den Fig. 2 bis 5 dargestellt ist.

Es ist jedoch auch möglich, diese Nabenvorsprünge 15 in unsymmetrischer Verteilung anzuordnen, wodurch die Montage des verdrehbaren Zahnrades 4 auf dem Hauptzahnrad 2 vereinfacht werden kann.

Von Vorteil ist es jedoch, wenn die Nabenvorsprünge 15 in Richtung des Umfanges der Nabe 5 eine Gesamtlänge aufweisen, die zwischen 20 %, insbesondere 40 %, vorzugsweise 50 %, und 80 %, insbesondere 60 %, der Länge des Umfanges der Nabe 5 beträgt. Dabei wird die Länge des Umfanges der Nabe 5 in Höhe der Bodenfläche 30 der Ausnehmungen 20 - in radialer Richtung aus betrachtet - gemessen.

Gemäß einer weiteren Ausführungsvariante sind zumindest Übergänge 36 zwischen einer in axialer Richtung nach vorne weisenden Stirnfläche 37 der Nabenvorsprünge 15 und einer Umfangsfläche 38 im radial oberen Bereich der Nabenvorsprünge 15 gerundet oder gefast ausgebildet. Insbesondere können aber aller Übergänge zwischen der axial nach außen weisenden Stirnfläche der Nabe 5 und der Umfangsfläche der Nabe 5 gerundet oder gefast ausgebildet sein, also auch die Übergänge im Bereich der Bodenflächen 30 der Ausnehmungen 20 (es sei daraufhingewiesen, dass die Nabenvorsprünge 15 vorzugsweise einstückig mit der Nabe ausgebildet sind, sodass die Umfangsflächen 38 der Nabenvorsprünge 15 einen Teil des Gesamtumfanges der Nabe 5 bilden).

Das Hauptzahnrad 2 wird vorzugsweise nach einem Sinterverfahren einstückig hergestellt, d.h. dass die Nabe 5 und der Zahnradkörper 25 nicht aus zwei getrennten Teilen bestehen. Dazu wird aus einem Pulver, insbesondere einem Stahlpulver eine Vorform 39, wie sie in Fig. 6 beispielsweise dargestellt ist, durch die üblichen Schritte, wie gegebenenfalls Pulvermischen, Pulverpressen in einer Pressform, Sintern, gegebenenfalls nach Nachverdichten und/oder Kalibrieren, hergestellt. Im Wesentlichen unterscheidet sich diese Vorform 39 vom fertigen Zahnrad nur dadurch, dass die Hinterschneidung 23 bzw. die (Ring)nut zwischen den somit noch nicht fertig ausgebildeten Nabenvorsprüngen 15 und dem Zahnradkörper 25 noch nicht ausgebildet ist, wie dies der Vergleich der Fig. 6 und 7 zeigt. Diese Hinterschneidung 23 wird nach dem Sinterverfahren in einem spanenden Verfahrensschritt mit einem Werkzeug, beispielsweise einem Meißel oder durch Fräsen, hergestellt. Da die Vorform bereits die Ausnehmungen 20 zwischen den noch fertig zu stellenden Nabenvorsprüngen 15 aufweist, und Ausnehmungsendwände 40 der Ausnehmungen 20 während der spanenden Bearbeitung entfernt werden, taucht das Werkzeug mehrmals während der gesamten Bearbeitung teilweise wieder in das Material der Nabe 5 ein. Damit sind ein höherer Werkzeugverschleiß und ein vermehrte Gratbildung durch den unterbrochenen Schnitt in der Bearbeitungszone verbunden. Um in Hinblick auf diese Probleme eine Verbesserung bzw. Abhilfe zu schaffen, werden nach dem erfindungsgemäßen Verfahren zumindest jene Seitenwände 41 der Ausnehmungen 20, die gleichzeitig die Seitenwände 41 der Nabevorsprünge 15 sind, in die während der spanenden Bearbeitung das Werkzeug von Bereich der Ausnehmungen 20 kommend in das Material der Nabe 5 eintaucht, zumindest teilweise in einem Winkel zur Bodenfläche 30 ausgerichtet, der größer als 90 ° ist. Mit anderen Worten ausgedrückt weisen die Nabenvorsprünge 15 in axialer Richtung betrachtet zumindest teilweise ein trapezförmigen Querschnitt auf.

Mit "zumindest teilweise trapezförmig" ist gemeint, dass sich der Querschnitt der Nabenvorsprünge 15 auch aus mehreren geometrischen Formen zusammensetzen kann, beispielsweise der Querschnitt aus einem Rechteck mit aufgesetztem Trapez besteht.

Neben der Ausbildung des Querschnittes zumindest teilweise in Form eines rechtwinkeligen Trapezes besteht weiters die bevorzugte Möglichkeit, dass auch eine zweite Seitenwand 42 der Ausnehmungen 20 bzw. der Nabenvorsprünge 15, die in Umfangsrichtung auf die erste Seitenwand 41 folgend ausgebildet ist, gegen die Bodenfläche 30 geneigt ausgebildet ist, mit einem Winkel der größer als 90 ° ist. Besonders bevorzugt sind dabei Ausführungen des Querschnittes, der symmetrisch ist, also die beiden zumindest teilweise geneigten Seitenflächen 41, 42 den gleichen Winkelwert mit der Bodenfläche 30 einschließen, sodass der Querschnitt der Nabenvorsprünge 15 in axialer Richtung zumindest teilweise, bevorzugt zur Gänze ein gleichschenkeliges Trapez aufweist.

Der Winkel, den zumindest eine der Seitenflächen 41, 42 mit der Bodenfläche 30 einschließt, ist bevorzugt aus einem Bereich mit einer unteren Grenze von 95 °, insbesondere 100 °, und einer oberen Grenze von 130 °, insbesondere 120 °, ausgewählt.

Vorzugsweise ist weiters vorgesehen, dass zumindest einzelne, insbesondere sämtliche, Kanten bzw. Übergänge im Bereich der Nabenvorsprünge 15 in Umfangsrichtung 3, also die Übergänge bzw. Kanten zwischen der Bodenfläche 30 und den Seitenwänden 41, 42 und/oder zwischen den Seitenwänden 41, 42 und einer Deckwand 43 gerundet bzw. gefast ausgebildet sind.

Es ist im Rahmen der Erfindung nicht erforderlich, dass die Vorsprünge 16 des verdrehbaren Zahnrades 4 einen Querschnitt aufweisen, der der Kontur der Ausnehmungen 30 der Nabe 5 folgen, wenngleich dies die bevorzugte Ausführungsvariante der Zahnradanordnung 1 ist.

Gemäß einer weiteren Ausführungsvariante der Zahnradanordnung 1 ist vorgesehen, das an einer Stirnfläche 44 des verdrehbaren Zahnrades 4 ein Ringsteg 45 ausgebildet wird, über den das verdrehbare Zahnrad 2 am Zahnradkörper 25 des Hauptzahnrades 2 anliegt, wie dies in Fig. 4 dargestellt ist. Einerseits wird damit durch die geringere Anlagefläche des verdrehbaren Zahnrades 4 am Hauptzahnrad 2 die Verdrehbarkeit des verdrehbaren Zahnrades 4 vereinfacht, anderseits kann damit zwischen dem verdrehbaren Zahnrad 4 und dem Hauptzahnrad 2 eine Ausnehmung 46 in Form einer Ringnut zur Aufnahme des Federelementes 7 zwischen dem verdrehbaren Zahnrad 4 und dem Hauptzahnrad 2 geschaffen werden. Diese Ausnehmung 46 kann aber auch zumindest teilweise durch eine entsprechende Einformung in den Zahnradkörper 25 des Hauptzahnrades 2 geschaffen werden.

Dieser Ringsteg 45 kann aber auch am Zahnradkörper 25 des Hauptzahnrades 2 angeordnet werden, bzw. besteht die Möglichkeit, dass sowohl das verdrehbare Zahnrad 4 als auch das Hauptzahnrad 2 einen derartigen Ringsteg 45 aufweisen.

Des weiteren besteht die Möglichkeit, dass im Bereich, an dem der Ringsteg 45 am Hauptzahnrad 2 anliegt, in letzterem eine Ringnut zur Aufnahme des Ringsteges 45 angeordnet ist, um damit eine bessere Führung des verdrehbaren Zahnrades 4 am Hauptzahnrad 2 während der Verdrehung zu erreichen.

Es ist weiters möglich, das das verdrehbare Zahnrad 4 in einem Bereich 47 der Anlage der Vorsprünge 16 an den Nabenvorsprüngen 15 vertieft ausgebildet ist, sodass die Vorsprünge 16 nicht auf einer Ebene mit einem Hauptkörper 48 des verdrehbaren Zahnrades 4 oberhalb des Bereiches 47, wie dies in Fig. 5 dargestellt ist, um damit die Ausbildung des Banjonettverschlusses zwischen den beiden Zahnrädern zu verbessern.

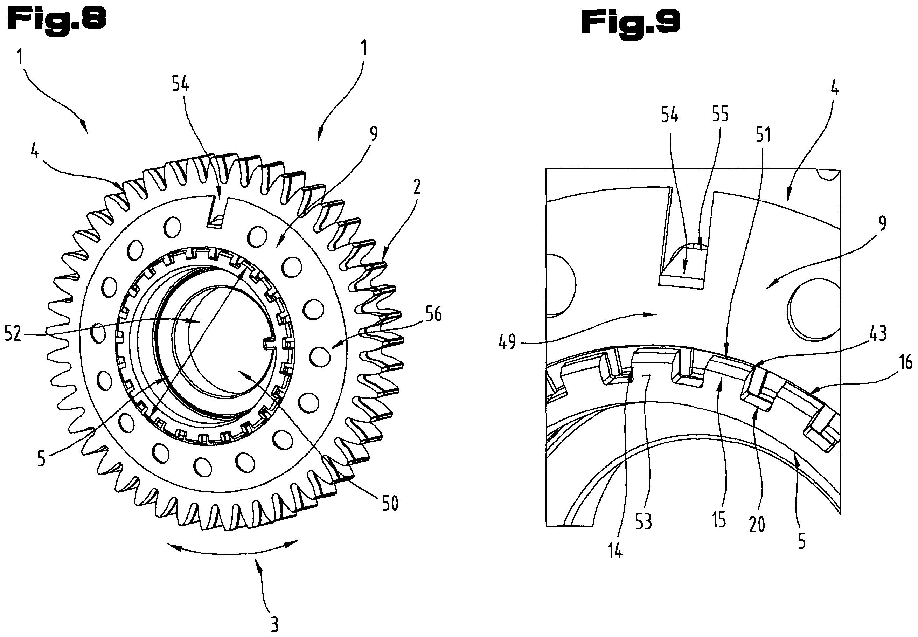

Die Fig. 8 und 9 zeigen eine nicht erfindungsgemäße Ausführungsvariante der Zahnradanordnung 1 in Schrägansicht bzw. Detailansicht mit dem Hauptzahnrad 2, dem daran anliegenden verdrehbaren Zahnrad 4 und dem Federelement 9, insbesondere einer Tellerfeder.

Der Bajonettverschluss 14 ist bei dieser Ausführungsvariante der Zahnradanordnung 1 zwischen der Nabe 5 und dem als Axialsicherung dienenden Federelement 9 ausgebildet. Dazu weist die Nabe 5 wiederum die radial nach außen ragenden Nabenvorsprünge 15 auf. Zur Ausbildung des Bajonettverschlusses 14 sind ebenfalls die Vorsprünge 16 vorgesehen, die allerdings zum Unterschied zu voranstehender Ausführungsvariante am Federelement 9 angeordnet sind und von einem Federelementkörper 49 radial nach innen ragend in einer Ausnehmung 50 des Federelementes 9 angeordnet sind. Die Ausnehmung 50 ist in seiner Größe, d.h. seinem Durchmesser, so bemessen, dass das Federelement 9 auf die Nabe 5 aufgeschoben werden kann, wozu die Vorsprünge 16 am Federelement 9, wie bei voranstehender Ausführungsvariante die Vorsprünge 16 durch die Ausnehmungen 20 zwischen den Nabenvorsprüngen 15 geschoben werden.

Zum Unterschied zur voranstehender Ausführungsvariante des Bajonettverschlusses 14 ist hinter den Nabenvorsprüngen 15 keine Ringnut zur Aufnahme der Vorsprünge 16 des Federelementes 9 ausgebildet, sondern sind die Deckwände 43 bzw. Deckflächen gewinkelt ausgeführt, sodass also - in Umfangsrichtung 3 der Zahnradanordnung 1 betrachtet - die Nabenvorsprünge im Bereich der Deckwände 43 einen zumindest annähernd dreieckförmigen Querschnitt aufweisen. Dabei ist eine kantenartige Mittenerhöhung 51 so bemessen, dass ein den Mittenerhöhungen sämtlicher Nabenvorsprünge 15 folgender Kreis einen Durchmesser 52 aufweist, der größer ist als ein kleinster Innendurchmesser des Federelementes 9, der durch die Endbereiche der zungenförmigen Vorsprünge 16 des Federelementes 9 definiert ist. In axialer Richtung und in Richtung auf das Hauptzahnrad 2 wird der durch die der Nabenvorsprünge 15 definierte Durchmesser wieder kleiner - im Vergleich zu den durch die kantenförmigen Mittenerhöhungen 51 definierten Durchmesser - sodass die Vorsprünge 16 des Federelementes auf die Deckwände 43 der Nabenvorsprünge 15 aufgeschoben werden können, wie dies in Fig. 9 im Detail gezeigt ist.

Die Mittenerhöhungen 51 der Nabenvorsprünge 15 müssen nicht zwingend kantenförmig ausgebildet sein. Beispielsweise können diese Mittenerhöhungen 51 auch abgeflacht sein, wodurch sich hinsichtlich des Querschnittes der Nabenvorsprünge 15 im Bereich Deckwände 43 ein stufenförmiger Verlauf ergibt. Es besteht dabei die Möglichkeit, dass die Mittenerhöhungen 15 bis einer äußeren Stirnfläche 53 der Nabenvorsprünge 15 verlaufen.

Selbstverständlich besteht aber auch bei dieser nicht erfindungsgemäßen Ausführungsvariante des Bajonettverschlusses 14 die Möglichkeit die zu den Fig. 2 bis 7 beschriebene Hinterschneidung 23 zur Aufnahme der Vorsprünge 16 des Federelementes 9 vorzusehen. Allerdings bietet die erstgenannte Ausführungsvariante den Vorteil der kostengünstigeren Herstellung des Nabenvorsprünge 15, da diese in einem Sinterverfahren bereits fertig ausgeformt werden können bzw. der nachträgliche Materialabtrag bei der spanenden Bearbeitung des Hauptzahnrades 2, sofern diese erforderlich ist, im Vergleich zur Herstellung einer Ringnut geringer ist.

Diese Ausführungsvarianten bieten den Vorteil, dass ein Federelement 9 verwendet werden kann, dass mehr als acht Zungen (in diesem Fall die Vorsprünge 16) aufweist, wie dies bereits voranstehend beschrieben wurde.

Bevorzugt ist das Federelement 9 mit einer Verdrehsicherung 54 versehen, die bei der dargestellten Ausführungsvariante als Lasche ausgeführt ist, die in Richtung auf das verdrehbare Zahnrad 4 umgebogen ist und in einer Ausnehmung 55 des verdrehbaren Zahnrades 4 aufgenommen ist.

Es besteht aber auch die Möglichkeit, die Verdrehsicherung durch zumindest einen Vorsprung am Federelement 9 und/oder am verdrehbaren Zahnrad 2 zu bilden, der in eine entsprechende Ausnehmung des jeweils anderen Elements eingreift, beispielsweise in, insbesondere kreisförmige, Ausnehmungen 56 des Federelementes 9, wie dies in Fig. 8 dargestellt ist.

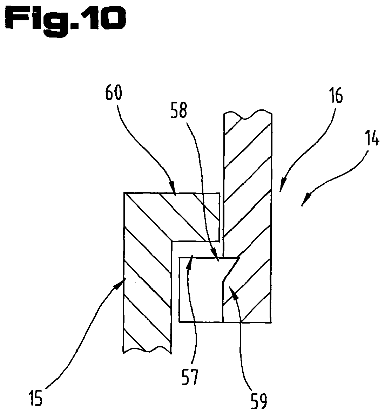

Fig. 10 zeigt eine Ausführungsvariante eines Bajonettverschlusses 14. Zum Unterschied zu den voranstehend beschriebenen Ausführungsvarianten sind die Nabenvorsprünge 15 und die Vorsprünge 16 des verdrehbaren Zahnrades 4 (nicht dargestellt) im Querschnitt - in Umfangsrichtung 3 (z.B. Fig. 8) betrachtet - mit jeweils einer Hinterschneidung 57, 58 versehen, sodass die Nabenvorsprünge 15 und die Vorsprünge 16 des verdrehbaren Zahnrades 4 winkelig ausgeführt sind und Abwinkelungen 59 der Vorsprünge 16 des verdrehbaren Zahnrades 4 unterhalb von Abwinkelungen 60 der Nabenvorsprünge 15 eingreifen. Die Abwinkelungen 59, 60 verlaufen dabei zumindest annähernd in axialer Richtung der Zahnradanordnung 1.

Der Vollständigkeit halber soll abschließend noch darauf hingewiesen sein, dass das Hauptzahnrad 2 und das verdrehbare Zahnrad 4 vorzugsweise aus einem Sinterstahl hergestellt sind, das weitere Federelement 9 aus einem Federstahl besteht.

Der Ordnung halber sei abschließend darauf hingewiesen, dass zum besseren Verständnis des Aufbaus der Zahnradanordnung 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Zahnradanordnung | 41 | Seitenwand |
| 2 | Hauptzahnrad | 42 | Seitenwand |
| 3 | Umfangsrichtung | 43 | Deckwand |
| 4 | Zahnrad | 44 | Stirnfläche |
| 5 | Nabe | 45 | Ringsteg |
| | | | |
| 6 | Ausnehmung | 46 | Ausnehmung |
| 7 | Federelement | 47 | Bereich |
| 8 | Richtung | 48 | Hauptkörper |
| 9 | Federelement | 49 | Federelementkörper |
| 10 | Ring | 50 | Ausnehmung |
| | | | |
| 11 | Zunge | 51 | Mittenerhöhung |
| 12 | Nut | 52 | Durchmesser |
| 13 | Endbereich | 53 | Stirnfläche |
| 14 | Bajonettverschluss | 54 | Verdrehsicherung |
| 15 | Nabenvorsprung | 55 | Ausnehmung |
| | | | |
| 16 | Vorsprung | 56 | Ausnehmung |
| 17 | Ausnehmung | 57 | Hinterschneidung |
| 18 | Innendurchmes ser | 58 | Hinterschneidung |
| 19 | Außendurchmesser | 59 | Abwinkelung |
| 20 | Ausnehmung | 60 | Abwinkelung |
| | | | |
| 21 | Breite | | |
| 22 | Breite | | |
| 23 | Hinterschneidung | | |
| 24 | Stirnfläche | | |
| 25 | Zahnradkörper | | |
| | | | |
| 26 | Breite | | |
| 27 | Breite | | |
| 28 | Stirnfläche | | |
| 29 | Nutengrund | | |
| 30 | Bodenfläche | | |
| | | | |
| 31 | Höhe | | |
| 32 | Höhe | | |
| 33 | Sicherungselement | | |
| 34 | Ausnehmung | | |
| 35 | Ausnehmung | | |
| | | | |
| 36 | Übergang | | |
| 37 | Stirnfläche | | |
| 38 | Umfangsfläche | | |
| 39 | Vorform | | |
| 40 | Ausnehmungsendwand | | |

## Patentansprüche

1. Zahnradanordnung (1) mit einem Hauptzahnrad (2) und einem gegenüber diesem relativ in Umfangsrichtung (3) verdrehbaren Zahnrad (4), wobei das Hauptzahnrad (2) einen Zahnradkörper (25) aufweist, auf dem in axialer Richtung vorstehend eine Nabe (5) einerseits zur Aufnahme einer Welle und andererseits zur Anordnung des verdrehbaren Zahnrades (4) darauf angeordnet ist, wozu das verdrehbare Zahnrad (4) eine zu einer axial verlaufenden Mittelachse des Hauptzahnrades (2) koaxiale Ausnehmung (17) aufweist, und wobei das Hauptzahnrad (2) mit dem verdrehbaren Zahnrad (4) mittels eines Bajonettverschlusses (14) verbunden ist, der zwischen der Nabe (5) und dem verdrehbaren Zahnrad (4) ausgebildet ist, wobei an der Nabe (5) radial nach außen ragende Nabenvorsprünge (15) angeordnet sind und in axialer Richtung zwischen den Nabenvorsprüngen (15) und dem Zahnradkörper (25) eine in Richtung des Umfanges der Nabe (5) verlaufende Hinterschneidung (23) in Form einer Nut ausgebildet ist, wobei in der Ausnehmung (17) des verdrehbaren Zahnrades (4) radial nach innen ragende Vorsprünge (16) ausgebildet sind, und wobei ein Innendurchmesser (18) zwischen zwei einander gegenüberliegenden Vorsprüngen (16) eine Größe aufweist, die zumindest annähernd einem Außendurchmesser (19) der Nabe (5) im Bereich von Ausnehmungen (20) entspricht, die in Umfangsrichtung (3) zwischen zwei nebeneinander angeordneten Nabenvorsprüngen (15) an der Nabe (5) ausgebildet sind, wobei durch den Bajonettverschluss eine Axialsicherung für das verdrehbare Zahnrad gebildet ist und damit die relative Lage des verdrehbaren Zahnrades (4) in axialer Richtung der Zahnradanordnung (1) fixiert wird, wobei eine Breite (26) der Hinterschneidung (23) eine Größe aufweist, die zumindest annähernd einer Breite (27) der Vorsprünge (16) des verdrehbaren Zahnrades (4) in axialer Richtung entspricht, **dadurch gekennzeichnet, dass** die Nabenvorsprünge (15) in axialer Richtung betrachtet zumindest teilweise einen trapezförmigen Querschnitt aufweisen.

2. Zahnradanordnung (1) nach Anspruch 1, **dadurch gekennzeichnet, dass** die Nabenvorsprünge (15) symmetrisch verteilt über den Umfang der Nabe (5) angeordnet sind.

3. Zahnradanordnung (1) nach Anspruch 1 oder 2, **dadurch gekennzeichnet, dass** sich die Hinterschneidung (25) durchgehend über den Umfang der Nabe (5) erstreckt.

4. Zahnradanordnung (1) nach einem der Ansprüche 1 bis 3, **dadurch gekennzeichnet, dass** die Nabenvorsprünge (15) in Umfangsrichtung (3) der Nabe (5) eine Gesamtlänge aufweisen, die zwischen 20 % und 80 % der Länge des Umfanges der Nabe (5) beträgt.

5. Zahnradanordnung (1) nach einem der Ansprüche 1 bis 4, **dadurch gekennzeichnet, dass** ein Übergang zwischen einer Stirnfläche der Nabe (5) und der Umfangsfläche (38) im Bereich der Nabenvorsprünge (15) gerundet oder gefast ausgebildet ist.

6. Verfahren zur Herstellung eines Bajonettverschlusses (14) für eine ein Hauptzahnrad (2) und ein gegenüber diesem relativ in Umfangsrichtung (3) verdrehbares Zahnrad (4) aufweisende Zahnradanordnung (1) nach einem der Ansprüche 1 bis 6, wobei das Hauptzahnrad (2) einen Zahnradkörper (25) aufweist, auf dem in axialer Richtung vorstehend eine Nabe (5) einerseits zur Aufnahme einer Welle und andererseits zur Anordnung des verdrehbaren Zahnrades (4) darauf angeordnet ist, wozu das verdrehbare Zahnrad (4) eine zu einer axial verlaufenden Mittelachse des Hauptzahnrades (2) koaxiale Ausnehmung (17) aufweist, **dadurch gekennzeichnet, dass** dieses die Schritte umfasst:
- sintertechnische Herstellung einer einstückigen Vorform (39) für das Hauptzahnrad (2) aus dem Zahnradkörper (25) und der Nabe (5), wobei am Umfang der Nabe (5) von einer Stirnfläche der Nabe (5) beginnend, in axialer Richtung auf den Zahnradkörper (25) verlaufende Ausnehmungen (20) ausgebildet werden, die sich bis zu einem, der Stirnfläche der Nabe (5) in axialer Richtung gegenüberliegenden Ausnehmungsendwand (40) erstrecken, und die jeweils zwei Seitenwände (41, 42) und eine Bodenfläche (30) aufweisen, wobei zumindest eine der Seitenwände (41, 42) einen Winkel zur Bodenfläche (30) der Ausnehmung (20) einschließt, der größer als 90 ° ist;
- spanende Bearbeitung der Nabe (5) in Umfangsrichtung (3), wodurch die Ausnehmungsendwände (40) entfernt und teilweise Hinterschneidungen (23) gebildet werden, wodurch Nabenvorsprünge (15) gebildet werden, die einen Teil des Bajonettverschlusses (14) bilden.

7. Verfahren nach Anspruch 6, **dadurch gekennzeichnet, dass** der Winkel zwischen den zumindest einen Seitenwänden (41, 42) und den Bodenflächen (30) ausgewählt wird aus einem Bereich mit einer unteren Grenze von 95 ° und einer oberen Grenze von 130 °.

8. Verfahren nach Anspruch 6 oder 7, **dadurch gekennzeichnet, dass** zumindest einzelne Kanten, bevorzugt sämtliche Kanten, der Ausnehmungen (30) gerundet oder gefast ausgebildet werden.

9. Verfahren nach einem der Ansprüche 6 bis 8, **dadurch gekennzeichnet, dass** das verdrehbare Zahnrad (4) ebenfalls sintertechnisch hergestellt wird, wobei radial nach innen verlaufende Vorsprünge (16) in der Ausnehmung (17) des Zahnrades (2) geformt werden.

10. Verfahren nach Anspruch 9, **dadurch gekennzeichnet, dass** an einer in radialer Richtung verlaufenden Stirnfläche (44) des verdrehbaren Zahnrades (2) ein Ringsteg (45) ausgebildet wird.

## Claims

1. A toothed wheel arrangement (1) comprising a main toothed wheel (2) and a toothed wheel (4) rotatable relative thereto in a circumferential direction (3), wherein the main toothed wheel (2) comprises a toothed wheel body (25) on which a hub (5) projecting in an axial direction is arranged on the one hand for mounting a shaft and on the other hand for the arrangement of the rotatable toothed wheel (4), for which purpose the rotatable toothed wheel (4) has a cut-out (17) coaxial to an axially running central axis of the main toothed wheel (2), and wherein the main toothed wheel (2) is connected to the rotatable toothed wheel (4) by means of a bayonet fastening (14) which is configured between the hub (5) and the rotatable toothed wheel (4), wherein radially outwardly projecting hub projections (15) are arranged on the hub (5) and in an axial direction between the hub projections (15) and the toothed wheel body (25) an undercut (23) in the shape of a groove is configured in the direction of the circumference of the hub (5), wherein in the cut-out (17) of the rotatable toothed wheel (4) radially inwardly projecting projections (16) are formed and wherein an inner diameter (18) between two opposite projections (16) has a size which corresponds at least approximately to an outer diameter (19) of the hub (5) in the region of cut-outs (20) which are formed in the circumferential direction (3) between two hub projections (15) arranged alongside one another on the hub (5), wherein an axial securing for the rotatable toothed wheel (4) is formed by the bayonet fastening and the relative position of the rotatable toothed wheel (4) in the axial direction of the toothed wheel arrangement (1) is thereby fixed, wherein a width (26) of the undercut (23) exhibits a size which corresponds at least approximately to a width (27) of the projections (16) of the rotatable toothed wheel (4) in an axial direction, **characterized in that** the hub projections (15), as viewed in an axial direction, have at least partly a trapezoidal cross section.

2. The toothed wheel arrangement (1) according to claim 1, **characterized in that** the hub projections (15) are arranged distributed symmetrically over the circumference of the hub (5).

3. The toothed wheel arrangement (1) according to claim 1 or 2, **characterized in that** the undercut (25) extends continuously over the circumference of the hub (5).

4. The toothed wheel arrangement (1) according to one of claims 1 to 3, **characterized in that** the hub projections (15) in the circumferential direction (3) of the hub (5) have a total length which is between 20 % and 80 % of the length of the circumference of the hub (5).

5. The toothed wheel arrangement (1) according to one of claims 1 to 4, **characterized in that** a transition between an end face of the hub (5) and the circumferential surface (38) in the region of the hub projections (15) is formed in a rounded or beveled manner.

6. A method for producing a bayonet fastening (14) for a toothed wheel arrangement (1) comprising a main toothed wheel (2) and a toothed wheel (4) rotatable relative to the latter in the circumferential direction (3) according to one of claims 1 to 5, wherein the main toothed wheel (2) has a toothed wheel body (25), on which projecting in an axial direction a hub (5) is arranged on the one hand for mounting a shaft and on the other hand for the arrangement of the rotatable toothed wheel (4) thereon, for which purpose the rotatable toothed wheel (4) comprises a cut-out (17) coaxial to an axially running central axis of the main toothed wheel (2), **characterized in that** it comprises the steps:
- sintering a one-piece preform (39) for the main toothed wheel (2) from the toothed wheel body (25) and the hub (5), wherein on the circumference of the hub (5) starting from an end face of the hub (5), cut-outs (20) are formed running in axial direction to the toothed wheel body (25), which cut-outs extend up to a cut-out end wall (40) opposite the end face of the hub (5) in an axial direction, and which each have two side walls (41, 42) and a base surface (30), wherein at least one of the side walls (41, 42) forms an angle with the base surface (30) of the cut-out (20), which is greater than 90°;
- machining the hub (5) in the circumferential direction (3), as a result of which the cut-out end walls (40) are removed and partial undercuts (23) are formed, as a result of which hub projections (15) are formed which form part of the bayonet fastening (14).

7. The method according to claim 6, **characterized in that** the angle between the at least one side wall (41, 42) and the base surfaces (30) is selected from a range with a lower limit of 95 ° and an upper limit of 130 °.

8. The method according to claim 6 or 7, **characterized in that** at least individual edges, preferably all edges, of the cut-outs (30) are shaped in a rounded or beveled manner.

9. The method according to one of claims 6 to 8, **characterized in that** the rotatable toothed wheel (4) is also produced by sintering, wherein radially inwardly running projections (16) are formed in the cut-out (17) of the toothed wheel (2).

10. The method according to claim 9, **characterized in that** on an end face (44) of the rotatable toothed wheel (2) running in a radial direction an annular web (45) is formed.

## Revendications

1. Agencement de roues dentées (1) comprenant une roue dentée principale (2) et une roue dentée (4) déplaçable en rotation en direction circonférentielle (3) par rapport à la première, la roue dentée principale (2) ayant un corps de roue dentée (25) sur lequel est disposé un moyeu (5) en saillie servant d'une part à recevoir un axe et d'autre part à disposer la roue dentée (4) déplaçable en rotation, la roue dentée (4) déplaçable en rotation présentant un évidement (17) coaxial à un axe central s'étendant axialement de la roue dentée principale (2), et la roue dentée principale (2) étant reliée à la roue dentée (4) déplaçable en rotation par un emboîtement à baïonnette (14) qui est formé entre le moyeu (5) et la roue dentée (4) déplaçable en rotation, des saillies de moyeu (15) s'étendant radialement vers l'extérieur étant disposées sur le moyeu (5) et une contre-dépouille (23) sous la forme d'une rainure s'étendant dans la direction du pourtour du moyeu (5) étant formée en direction axiale entre les saillies de moyeu (15) et le corps de roue dentée (25), des saillies (16) s'étendant radialement vers l'intérieur étant formées dans l'évidement (17) de la roue dentée (4) déplaçable en rotation, et un diamètre intérieur (18) entre deux saillies (16) en regard présentant une dimension qui correspond au moins approximativement à un diamètre extérieur (19) du moyeu (5) aux alentours d'évidements (20) qui sont formés sur le moyeu (5) en direction périphérique (3) entre deux saillies de moyeu (15) avoisinantes, un verrouillage axial étant formé, par l'emboîtement à baïonnette, pour la roue dentée déplaçable en rotation et, par cela, la position relative de la roue dentée (4) déplaçable en rotation est fixée en direction axiale de l'agencement de roues dentées (1), une largeur (26) de la contre-dépouille (23) présentant une dimension qui correspond au moins approximativement à une largeur (27) des saillies (16) de la roue dentée (4) déplaçable en rotation, **caractérisé en ce que** les saillies de moyeu (15) présentent, vu en direction axiale, au moins partiellement une section transversale en forme de trapèze.

2. Agencement de roues dentées (1) selon la revendication 1, **caractérisé en ce que** les saillies de moyeu (15) sont disposées en répartition symétrique sur le pourtour du moyeu (5).

3. Agencement de roues dentées (1) selon la revendication 1 ou 2, **caractérisé en ce que** la contre-dépouille (25) s'étend de manière continue sur le pourtour du moyeu (5).

4. Agencement de roues dentées (1) selon l'une des revendications 1 à 3, **caractérisé en ce que** les saillies de moyeu (15) présentent, en direction périphérique (3) du moyeu (5), une longueur totale d'entre 20% et 80% de la longueur du pourtour du moyeu (5).

5. Agencement de roues dentées (1) selon l'une quelconque des revendications 1 à 5, **caractérisé en ce qu'**une transition entre une face frontale du moyeu (5) et la surface de pourtour (38) aux alentours des saillies de moyeu (15) est formée de façon arrondie ou chanfreinée.

6. Procédé de fabrication d'un emboîtement à baïonnette (14) pour un agencement de roues dentées (1) comprenant une roue dentée principale (2) et une roue dentée (4) déplaçable en rotation en direction circonférentielle (3) par rapport à la première selon l'une quelconque des revendications 1 à 6, la roue dentée principale (2) ayant un corps de roue dentée (25) sur lequel est disposé un moyeu (5) en saillie servant d'une part à recevoir un axe et d'autre part à disposer la roue dentée (4) déplaçable en rotation, ce pourquoi la roue dentée (4) déplaçable en rotation présentant un évidement (17) coaxial à un axe central s'étendant radialement de la roue dentée principale (2), **caractérisé en ce que** celui-ci comprend les étapes de
- fabrication par frittage d'une ébauche (39) en une seule pièce pour la roue dentée principale (2) avec le corps de roue dentée (25) et le moyeu (5), des évidements (20) étant formés sur le pourtour du moyeu (5), en commençant à une face frontale du moyeu (5), qui s'étendent en direction axiale sur le corps de roue dentée (25) et qui s'étendent jusqu'à une paroi de fond d'évidement (40) située en direction axiale en regard de la face frontale du moyeu (5), et qui présentent chacun deux parois latérales (41, 42) et une surface de fond (30), au moins une des parois latérales (41, 42) enfermant avec la surface de fond (30) de l'évidement (20) un angle qui est supérieur à 90°,
- usinage avec formation de copeaux du moyeu (5) en direction périphérique (3), les parois de fond (40) des évidements étant enlevées et des contre-dépouilles (23) étant formées partiellement, ce par quoi des saillies de moyeu (15) étant formées qui constituent une partie de l'emboîtement à baïonnette (14).

7. Procédé selon la revendication 6, **caractérisé en ce que** l'angle entre lesdites au moins unes parois latérales (41, 42) et les surfaces de fond (30) est choisi dans une plage ayant une limite inférieure de 95° et une limite supérieure de 130°.

8. Procédé selon la revendication 6 ou 7, **caractérisé en ce que** au moins quelques bords, de préférence tous les bords, des évidements (20) sont formés de façon arrondie ou chanfreinée.

9. Procédé selon l'une quelconque des revendications 6 à 8, **caractérisé en ce que** la roue dentée (4) déplaçable en rotation est également réalisée par frittage, des saillies (16) s'étendant radialement vers l'intérieur étant formées dans l'évidement (17) de la roue dentée (2).

10. Procédé selon la revendication 9, **caractérisé en ce qu'**un pont annulaire (45) est formé sur une face frontale (44), s'étendant en direction radiale, de la roue dentée (4) déplaçable en rotation.
